# EUROPEAN PATENT SPECIFICATION

(11) **EP 3 018 611 B1**
(45) Date of publication and mention of the grant of the patent: **30.12.2020**
(21) Application number: 14192085.0
(22) Date of filing: 06.11.2014
(51) Int. Cl.: G06F 21/62, G06F 21/45, H04L 29/06, G06F 1/16

(54) **Method for anonymous registration of private data**
Verfahren zur anonymen Registrierung privater Daten
Procédé d'enregistrement anonyme de données privées

(43) Date of publication of application: 11.05.2016
(73) Proprietor: Frédérique Constant S.A., 1228 Plan-les-Ouates (CH)
(72) Inventor: Stas, Peter, 1228 Plan-Les-Ouates (CH)
(74) Representative: Weihs, Bruno Konrad

(56) References cited:
- US-A1- 2011 078 779
- US-A1- 2013 191 893
- US-B1- 8 693 655
- Anonymous: "Password manager - Wikipedia, the free encyclopedia", , 14 October 2014 (2014-10-14), XP055180518, Retrieved from the Internet: URL:http://en.wikipedia.org/w/index.php?ti tle=Password_manager&oldid=629549218 [retrieved on 2015-03-31]

## Description

### Technical field

The invention relates to a method for anonymous registration of private data. The method is particularly adapted for use with portable connected devices, e.g., smart wristwatches.

### Background

The omnipresence of information on the network and the profusion of portable connected devices make it easy for users to access virtually any information independent from time and location. For portable connected devices the information may conveniently be transmitted between a network or a dedicated local server, and the portable connected devices.

Luxury wristwatches or watches constitute a category of the portable connected devices. Owners of luxury smartwatches may wish to automatically backup data generated in their smartwatch in a safe repositery for later retrieval.

It is known to open a secure account on a server accessible through the network or on the dedicated local server. The server may for example typically be accessible through internet. The opening typically requires the user to provide a user identification and a password which need to be entered in response to a registration request form page output by the server. This requires creating a user identification and a password which need to be remembered to subsequently access to the secure account. Prior art is known from US8 693 655 B1.

It is an aim of the invention to provide a simplified alternative method of opening and using a secure account.

It is a further aim of the invention to create an anonymous repository for sensible personal and health information.

### Summary of invention

The invention is defined by independent claim 1.

In a first aspect the invention provides a method for anonymous registration of data on a secure server. The method comprises on a user side, in a user environment comprising at least one portable connected device and a user interface to read information received or to enter information, send a request for opening of account to a server side; on a server side, in a server environment comprising at least a secure server, receive the request for opening of account, generate a list of numbered accounts and send the list of numbered accounts to the user side for display in the user environment; on the user side select one of the list of numbered accounts displayed and send the selection to the server side; on the server side, request a password for the selected account and send this request to the user side for display in the user environment; on the user side, enter a unique password for the password and send the unique password to the server side; and, on the server side, encrypt the unique password and combine the encrypted password with the selected account number to obtain a unique combination.

In a preferred embodiment, the method further comprises on the user side, select the selected account and input the selected account into the at least one connected portable device; read collected data and transmit the collected data together with the selected account to the server side; and on the server side, store the collected data for the selected account.

In a further preferred embodiment, the method further comprises on the user side, enter the unique password into the at least one connected portable device and transmit the unique password together with the selected account number to the server side; on the server side, read the unique password, perform an authentication for the access to the selected account; on the user side, transmit a request for data from the selected account to the server side; and, on the server side, receive the request for data from the selected account providing from the user side, and if the authentification for the access to the selected account is in order, retrieve the data requested and output the retrieved data for transmittal to the user side.

In a further preferred embodiment the collected data is sensible personal and/or health information.

### Brief description of the drawings

The invention will be better understood in light of the description of preferred embodiments and the drawings, wherein
figure 1 contains a flowchart for the opening of a user account according to an example embodiment of the method according to the invention;
figure 2 contains a flowchart for the storing of collected data in the user account of a server;
figure 3 contains a flowchart for the retrieval of stored collected data from a server; and
figure 4 show a schematic network comprising connected portables devices and a server according to an example embodiment of the invention.

### Detailed description of preferred embodiments

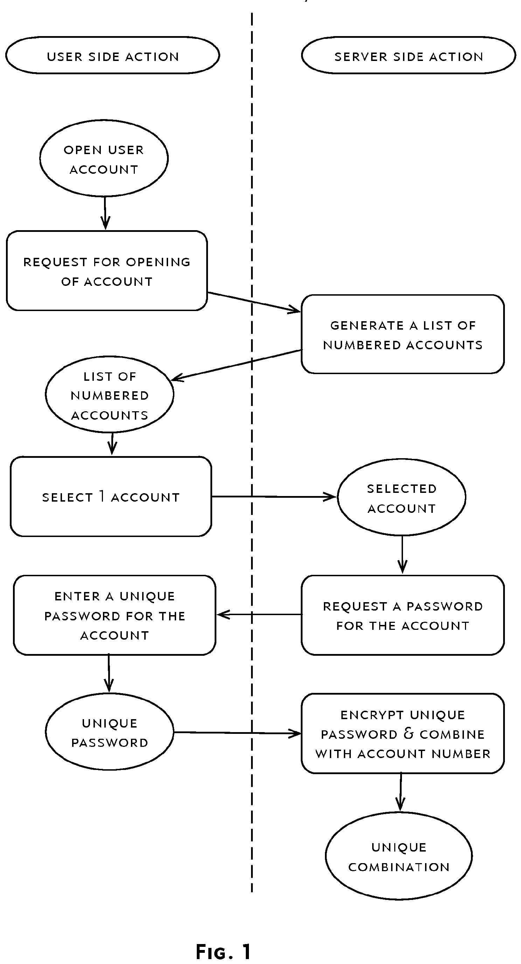

Referring to figure 1, this shows a flowchart illustrating an example embodiment for implementing the method for anonymous registration of private data according to the invention. More precisely figure 1 illustrates how to open a user account on a dedicated server.

The flowchart illustrates actions that are initiated or take place on the user side on one hand, and actions that take place on the server side on the other hand.

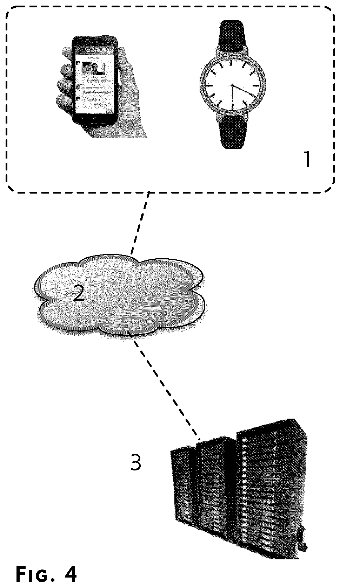

Referring to figure 4, when discussing the user side, it is possible to make use of a connected portable device 1 or a plurality of connected portable devices, each of which possibly collaborates with an other. The connected portable device 1 may for example be a smartphone or a smartwatch, that may directly or indirectly connect to a network 2, e.g., a local area network or internet. At least one of the connected devices provides a user interface that allows to select and/or enter characters, e.g., characters making up a password. The user interface of one connected device, e.g., the smartphone, may advantageously be used to enter data instead of an other connected device, e.g., instead of the smartwatch. A server system 3 is also connected to the network 2 . Appropriate communication protocols enable communication over the network 2 between the connected portable device(s) 1 and the server 3.

Referring again to figure 1, a user is opening a user account. The user makes use of his connected portable device (not shown in figure 1) or a combination of a plurality of portable devices (also not shown in figure 1) to initiate the opening. For reasons of simplification and better understanding we will refer in the following to one connected portable device only. The user account is opened and housed on a secure server (not shown in figure 1), the access to which by the connected portable device is assumed to be made over an encrypted link (not shown in figure 1) in a manner well known in prior art that will not be described in further detail here. A *request for opening of account* is generated on the user side and transmitted to the server side.

On the server side, the server proceeds to *generate a list of numbered accounts* and transmits the *list of numbered accounts* to the user side where it is presented to the user on the user interface (not shown in figure 1) in a known manner.

On the user side, the user proceeds to *select 1 account* from the list of numbered accounts and the *selected account* is signaled to the server.

On the server side, the server memorizes the selected account and proceeds to *request a password for the account* which is transmitted to the user for further processing through the user interface in a known manner.

On the user side, the user invents a new unique password and proceeds on the user interface to *enter the unique password for the account.* The *unique password* is then communicated to the server in a known manner, where the server proceeds to *encrypt the unique password and to combine it with the account number* in order to obtain a *unique combination* which is securely kept in the server.

Preferably the unique combination is encrypted by the server using standard and well-known encryption technology that will not be described in more detail.

It is noted that the list of numbered accounts generated by the server is comprised of new and not yet used accounts on the server, i.e., available accounts. This makes the selected account already unique by its number as listed in the list of numbered accounts. The random character of the numbers in the list of numbered accounts is an important element of security and anonymity for the user. The list may typically comprise 50 numbered accounts randomly generated from available account numbers.

The anonymous character of the selected account enables to allow access by the user to stored information in the account by providing the number of the selected account only. The system remains comparatively safe for storage in the sense that the randomly attributed account number has no personal data attached to it, and that the randomly attributed account number can be chosen to have a sufficient number of digits to make it difficult to confuse with other existing randomly attributed account numbers possibly belonging to other users.

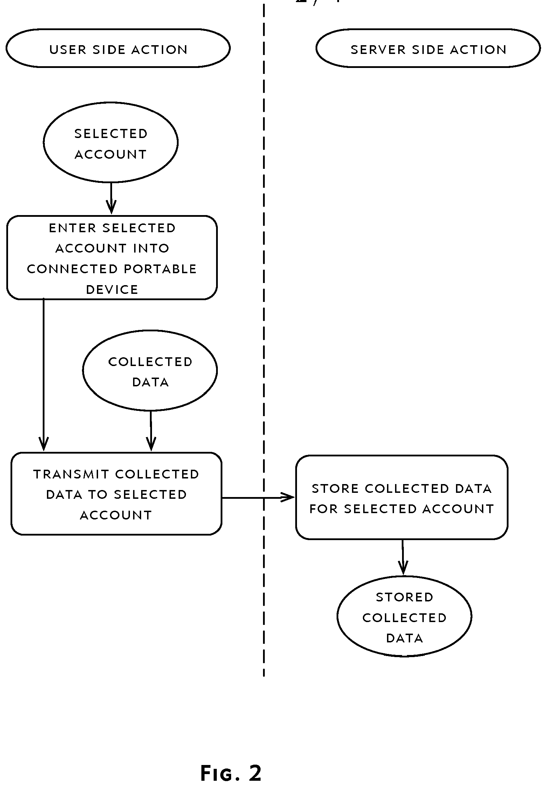

Referring now to figure 2, this contains a flowchart explaining the storing of collected data in the user account of a server according to an example embodiment of the invention. Again the flowchart is separated in two halves, one representing *user side action*, and the other *server side action.*

The collected data may be any data produced either by processing of information, measuring values from a sensor, retrieval from a data source etc. The collected data will typically before transmittal, upload and storage in the user account be stored at the connected portable device (not shown in figure 2) in a known manner.

In order to identify the connected portable device (not shown in figure 2) at the secure server, the selected account number must be entered in the connected portable device. This may possibly already have been done at the time of selecting the account as explained in figure 1, or at a later time. Advantageously the selected account number is entered once and for all only and stored in the connected portable device. In a generic manner, it can be established that no matter how the user proceeds, he does at least once proceed to *enter the selected account in the connected portable device.* The connected portable device subsequently uses the number of the *selected account* and reads the *collected data* to transmit it to the server.

On the server side, the server proceeds to *store received collected data for the selected account* hence obtaining *stored collected data.*

Collected data may be handled and stored by the server in many different manners well known in prior art. The server may for example append new-collected data to an existing file of older collected data.

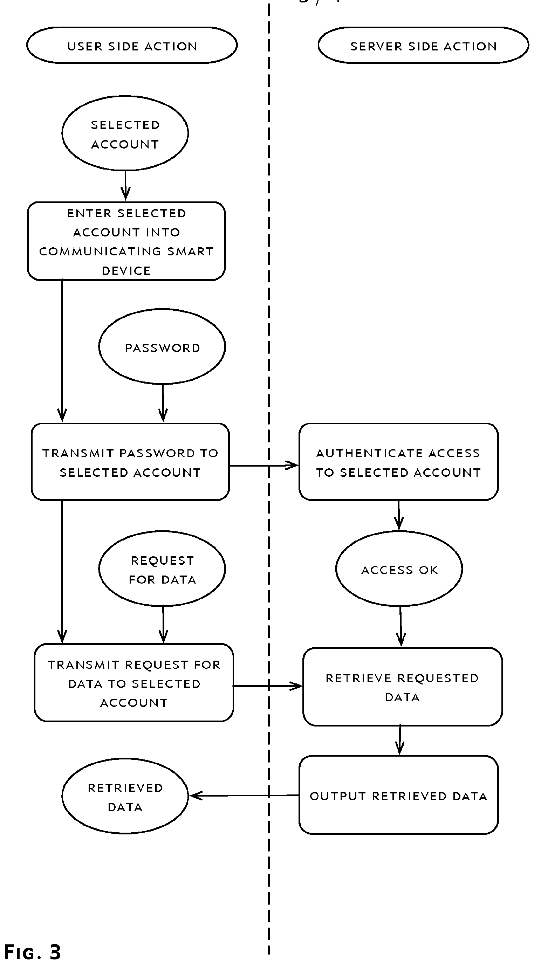

Referring now to figure 3, this contains a flowchart explaining an example embodiment for the retrieval of stored collected data from a secure server. The flowchart is separated in two halves, one representing *user side action,* and the other *server side action.*

The general idea is that the user is requested to provide his password-the one that he used as *unique password* in figure 1 after selecting the account-in order to obtain access to and retrieve data stored in his selected account.

Accordingly the user provides the number of the *selected account.*

As already explained for figure 2, in order to identify the connected portable device at the secure server, the selected account number must be entered in the connected portable device. This may have been done at the time of selecting the account as explained in figure 1, or at a later time. Advantageously the selected account number is entered once and for all only and stored in the connected portable device. In a generic manner, it can be established that no matter how the user proceeds, he at least once does proceed to *enter the selected account in the connected portable device.*

On the user side, the connected portable device subsequently uses the number of the *selected account* and reads the *password* as entered by the user of the user interface, and subsequently transmits it to the server. This may of course be done using state of the art encryption for added security.

On the server side, the server proceeds to *authenticate access for the user to the selected account* that will enable a subsequent request for data from the user to actually receive a favorable response from the server. The server signals and stores an *access ok* status.

On the user side, the user proceeds to use the number of the selected account and a formal *request for data* to *transmit a request for data to the selected account.*

On the server side, the server receives the request for data and proceeds to *retrieve the requested data* and subsequently *output the retrieved data* to the user who receives the *retrieved data.*

In summary the invention enables the creation of an anonymous repository for sensible personal and health information, and to subsequently store and /or retrieve the sensible information therefrom.

## Claims

1. A method for anonymous registration of data on a secure server, comprising
on a user side, in a user environment comprising at least one portable connected device and a user interface to read information received or to enter information, send a request for opening of account to a server side;
on a server side, in a server environment comprising at least a secure server, receive the request for opening of account, generate a list of random and anonymous numbered accounts and send the list of random and anonymous numbered accounts to the user side for display in the user environment;
on the user side select one random and anonymous numbered account of the list of numbered accounts displayed and send the selection to the server side;
on the server side, request a password for the selected account and send this request to the user side for display in the user environment;
on the user side, enter a unique password for the password and send the unique password to the server side;
on the server side, encrypt the unique password and combine the encrypted password with the selected account number to obtain a unique combination.

2. The method of claim 1, further comprising
on the user side, select the selected account and input the selected account into the at least one connected portable device; read collected data and transmit the collected data together with the selected account to the server side;
on the server side, store the collected data for the selected account.

3. The method of claim 2, further comprising
on the user side, enter the unique password into the at least one connected portable device and transmit the unique password together with the selected account number to the server side;
on the server side, read the unique password, perform an authentication for the access to the selected account;
on the user side, transmit a request for data from the selected account to the server side;
on the server side, receive the request for data from the selected account providing from the user side, and if the authentication for the access to the selected account is in order, retrieve the data requested and output the retrieved data for transmittal to the user side.

4. The method of claim 2 or claim 3, wherein the collected data is sensible personal and/or health information.

## Patentansprüche

1. Verfahren zur anonymen Registrierung von Daten auf einem sicheren Server, umfassend
auf einer Benutzerseite, in einer Benutzerumgebung, die mindestens eine tragbare verbundene Vorrichtung und eine Benutzerschnittstelle zum Lesen empfangener Informationen oder zum Eingeben von Informationen umfasst, Senden einer Anforderung zur Kontoeröffnung an eine Serverseite;
auf einer Serverseite, in einer Serverumgebung, die zumindest einen sicheren Server umfasst, Empfangen der Anforderung zur Kontoeröffnung, Erzeugen einer Liste zufälliger und anonymer nummerierter Kontos und Senden der Liste zufälliger und anonymer nummerierter Kontos an die Benutzerseite zur Anzeige in der Benutzerumgebung; auf der Benutzerseite, Auswählen eines zufälligen und anonymen nummerierten Kontos der angezeigten Liste nummerierter Kontos und Senden der Auswahl an die Serverseite;
auf der Serverseite, Anfordern eines Passworts für das ausgewählte Konto und Senden dieser Anforderung an die Benutzerseite zur Anzeige in der Benutzerumgebung;
auf der Benutzerseite, Eingeben eines eindeutigen Passworts als das Passwort und Senden des eindeutigen Passworts an die Serverseite;
auf der Serverseite, Verschlüsseln des eindeutigen Passworts und Kombinieren des verschlüsselten Passworts mit der ausgewählten Kontonummer, um eine eindeutige Kombination zu erhalten.

2. Verfahren nach Anspruch 1, ferner umfassend
auf der Benutzerseite, Auswählen des ausgewählten Kontos und Eingeben des ausgewählten Kontos in die mindestens eine verbundene tragbare Vorrichtung; Lesen erfasster Daten und Übertragen der erfassten Daten zusammen mit dem ausgewählten Konto an die Serverseite;
auf der Serverseite, Speichern der erfassten Daten für das ausgewählte Konto.

3. Verfahren nach Anspruch 2, ferner umfassend
auf der Benutzerseite, Eingeben des eindeutigen Passworts in die mindestens eine verbundene tragbare Vorrichtung und Übertragen des eindeutigen Passworts zusammen mit der ausgewählten Kontonummer an die Serverseite;
auf der Serverseite, Lesen des eindeutigen Passworts, Durchführen einer Authentifizierung für den Zugriff auf das ausgewählte Konto;
auf der Benutzerseite, Übertragen einer Anforderung für Daten von dem ausgewählten Konto an die Serverseite;
auf der Serverseite, Empfangen der von der Benutzerseite gelieferten Anforderung für Daten von dem ausgewählten Konto und, wenn die Authentifizierung für den Zugriff auf das ausgewählte Konto ordnungsgemäß ist, Abrufen der angeforderten Daten und Ausgeben der abgerufenen Daten zur Übertragung an die Benutzerseite.

4. Verfahren nach Anspruch 2 oder Anspruch 3, wobei es sich bei den erfassten Daten um sensible personenbezogene Informationen und/oder Gesundheitsinformationen handelt.

## Revendications

1. Procédé d'enregistrement anonyme de données sur un serveur sécurisé, comportant les étapes consistant
d'un côté utilisateur, dans un environnement d'utilisateur comportant au moins un dispositif connecté portable et une interface d'utilisateur servant à lire des informations reçues ou à saisir des informations, à envoyer une demande d'ouverture de compte à un côté serveur ;
d'un côté serveur, dans un environnement de serveur comportant au moins un serveur sécurisé, à recevoir la demande d'ouverture de compte, à générer une liste de comptes numérotés aléatoires et anonymes et à envoyer la liste de comptes numérotés aléatoires et anonymes au côté utilisateur en vue d'un affichage dans l'environnement d'utilisateur ;
du côté utilisateur, à sélectionner un compte numéroté aléatoire et anonyme de la liste de comptes numérotés affichée et envoyer la sélection au côté serveur ;
du côté serveur, à demander un mot de passe pour le compte sélectionné et envoyer cette demande au côté utilisateur en vue d'un affichage dans l'environnement d'utilisateur ;
du côté utilisateur, à saisir un mot de passe unique pour le mot de passe et envoyer le mot de passe unique au côté serveur ;
du côté serveur, à chiffrer le mot de passe unique et à combiner le mot de passe chiffré avec le numéro de compte sélectionné pour obtenir une combinaison unique.

2. Procédé selon la revendication 1, comportant en outre les étapes consistant
du côté utilisateur, à sélectionner le compte sélectionné et à introduire le compte sélectionné dans le ou les dispositifs portables connectés ; à lire des données recueillies et à transmettre les données recueillies, accompagnées du compte sélectionné, au côté serveur ;
du côté serveur, à stocker les données recueillies pour le compte sélectionné.

3. Procédé selon la revendication 2, comportant en outre les étapes consistant
du côté utilisateur, à saisir le mot de passe unique dans le ou les dispositifs portables connectés et à transmettre le mot de passe unique, accompagné du numéro de compte sélectionné, au côté serveur ;
du côté serveur, à lire le mot de passe unique, à effectuer une authentification en vue de l'accès au compte sélectionné ;
du côté utilisateur, à transmettre une demande de données issues du compte sélectionné au côté serveur ; du côté serveur, à recevoir la demande de données issues du compte sélectionné en provenance du côté utilisateur et, si l'authentification en vue de l'accès au compte sélectionné est concluante, à récupérer les données demandées et à délivrer les données récupérées en vue de la transmission au côté utilisateur.

4. Procédé selon la revendication 2 ou la revendication 3, les données recueillies étant des informations personnelles et/ou de santé sensibles.
